# EUROPEAN PATENT SPECIFICATION

(11) **EP 3 181 877 B1**
(45) Date of publication and mention of the grant of the patent: **05.12.2018**
(21) Application number: 16203514.1
(22) Date of filing: 12.12.2016
(51) Int. Cl.: F02D 41/14, F02D 41/24

(54) **Control device for internal combustion engine**
Steuerungsvorrichtung für Verbrennungsmotor
Dispositif de commande pour moteur à combustion interne

(30) Priority: 15.12.2015 JP 2015244107
(43) Date of publication of application: 21.06.2017
(73) Proprietor: Mitsubishi Jidosha Kogyo K.K., Tokyo 108-8410 (JP)
(72) Inventor: KANAYAMA, Jin, Tokyo, 108-8410 (JP); FUJIWARA, Ken, Tokyo, 108-8410 (JP); SHINOHARA, Yoshito, Tokyo, 108-8410 (JP)
(74) Representative: Vossius & Partner Patentanwälte Rechtsanwälte mbB

(56) References cited:
- EP-A2- 0 452 996
- JP-A- S6 075 737
- US-A- 5 052 357

## Description

### BACKGROUND OF THE INVENTION

The present invention relates to a control device for an internal combustion engine. The device executes learning about an injection amount of fuel injected into an internal combustion engine.

In a fuel injecting valve for injecting fuel into an internal combustion engine, a variation in a fuel injection amount may occur due to a dimensional error occurring in manufacturing or due to a slight difference in an attachment state of the fuel injecting valve assembled in the internal combustion engine. In order to suppress the variation, a difference between an instructed injection amount and an actual injection amount of the fuel may be learned so that the actual injection amount can be corrected based on the learned difference, for example, as described in JP-A-2015-86763. Due to the correction, the variation caused by an aging effect or the like of the fuel injecting valve can be suppressed so that a stable operating state of the internal combustion engine can be achieved (see paragraphs [0029] to [0030] etc. of JP-A-2015-86763). The learning is automatically performed each time the vehicle travels predetermined distance (e.g. every x₂km). Generally, the vehicle has more opportunities to travel on a lowland in altitude (e.g. about 0 meter in altitude). Therefore, the actual injection amount is often corrected based on data acquired in the lowland. Another example of a similar device is shown in US-5052357 and JP- S60 75737.

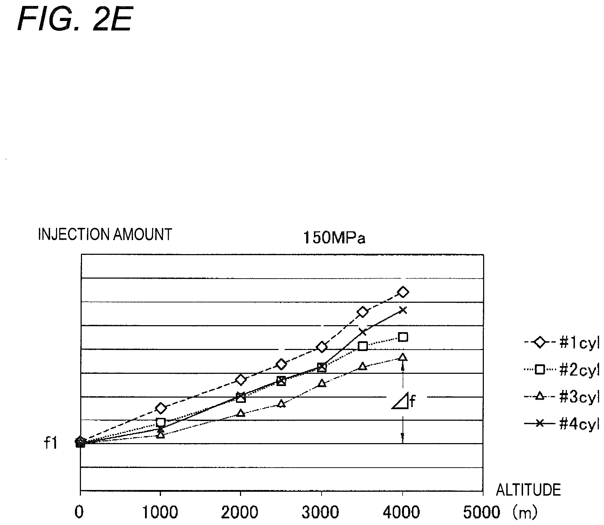

The inventors of the present application have found out that expected amount of the fuel is not injected in a case where the actual injection amount is corrected in lowland and then the vehicle travels on highland (e.g. over 1000 meter in altitude). Hereinafter, such cases will be explained with reference to figures. Fig. 2E of the present application shows a graph indicating relations between the actual injection amounts in a four-cylinder engine and the altitude the vehicle travels, where injection pressure is 150 MPa. The four-cylinder engine is corrected to inject a designated injection amount f₁ by learning at lowland. The corrected designated injection amount is called as a learned injection amount.

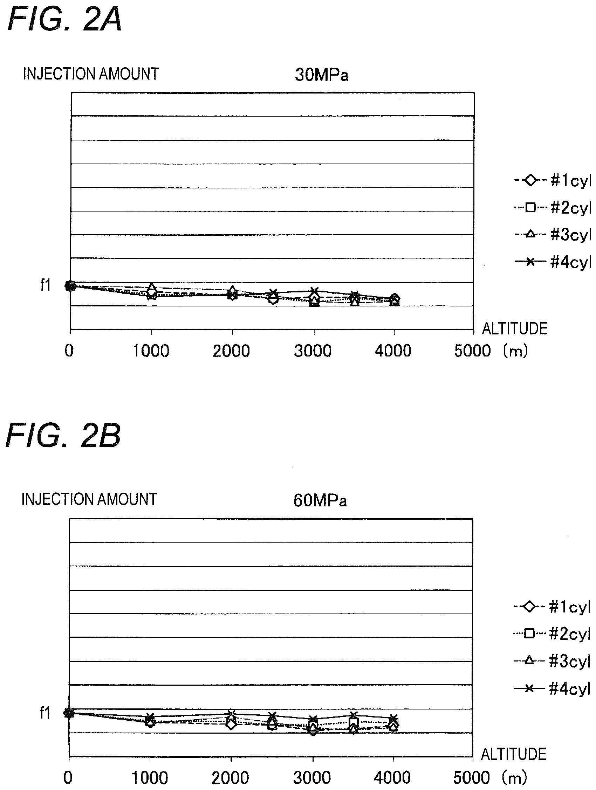

As shown in the figures, at lowland (about 0 meter in altitude), the actual injection amount is almost the same as the designated injection amount f₁ with the application of the learned injection amount. However, the higher a height in altitude is, the larger the actual injection amount becomes than the designated injection amount f₁. This means, when the learned injection amount is applied, the actual injection amount is more largely deviated from the designated injection amount in proportion as the altitude becomes higher. This tendency becomes more conspicuous as injection pressure increases as shown in Figs 2A to 2E.

It is thought that the cause of the above is that the atmospheric pressure in the highland is lower than that in the lowland and the lower atmospheric pressure affects the actual injection amount. Accordingly, even if the learning is performed at the highland so that the designated injection amount can be actually injected in the highland, there may be a case that the learning is not conducted appropriately. In case where the vehicle has many opportunities to travel on the highland and the learning is executed in the highland, there may be a case that a deviation in the actual injection amount is conspicuous in traveling on the lowland.

Therefore, an object of the present invention is to provide a control device for internal combustion engine that prevents learning of the injection amount from being executed under a condition which is not suitable for the learning.

### SUMMARY OF THE INVENTION

According to one aspect of the invention, a control device for an internal combustion engine mounted on a vehicle includes a fuel injection control portion that controls a fuel injecting valve that injects fuel into a cylinder of the internal combustion engine, a learning portion that learns an injection amount of the fuel injected from the fuel injection valve, an altitude measuring portion that measures an altitude of a position where the vehicle travels and a learning determining portion that determines whether to execute the learning based on the altitude, wherein when the altitude is equal to or higher than a predetermined learning prohibition altitude, the learning determining portion determines not to execute the learning.

The control device includes a pressure obtaining unit that obtains an injection pressure of the fuel injected from the fuel injection valve, wherein when the altitude is lower than the learning prohibition altitude and the injection pressure is equal to or higher than a predetermined injection pressure, the learning determining portion determines not to execute the learning.

In the control device, under a condition where the determination has been made that the learning is not executed, when the altitude becomes lower than the learning prohibition altitude and the injection pressure becomes lower than the predetermined injection pressure, the learning determining portion may determine to execute the learning.

The control device may further include a notification portion that issues a predetermined notification to a driver when a travel distance of the vehicle after the learning determining portion has determined not to execute the learning is equal to or longer than a predetermined travel distance.

According to the invention, a learning at the highland is not performed based on the determination by the learning determining portion when the vehicle travels at a height in altitude which is equal to or higher than the learning prohibition altitude. Therefore, the learning of the injection amount is prevented from being executed under a condition which is not suitable for the learning.

### BRIEF DESCRIPTION OF DRAWINGS

Fig. 1 is an overall configuration view showing an internal combustion engine provided with a control device for the internal combustion engine according to the invention.
Fig. 2A is a graph showing the relation between an altitude and an actual injection amount when injection pressure is 30 MPa.
Fig. 2B is graph showing the relation between an altitude and an actual injection amount when injection pressure is 60 MPa.
Fig. 2C is a graph showing the relation between an altitude and an actual injection amount when injection pressure is 90 MPa.
Fig. 2D is a graph showing the relation between an altitude and an actual injection amount when injection pressure is 120 MPa.
Fig. 2E is a graph showing the relation between an altitude and an actual injection amount when injection pressure is 150 MPa.
Fig. 3 is a flow chart showing a processing flow of the control device for the internal combustion engine.

### DETAILED DESCRIPTION OF EMBODIMENT

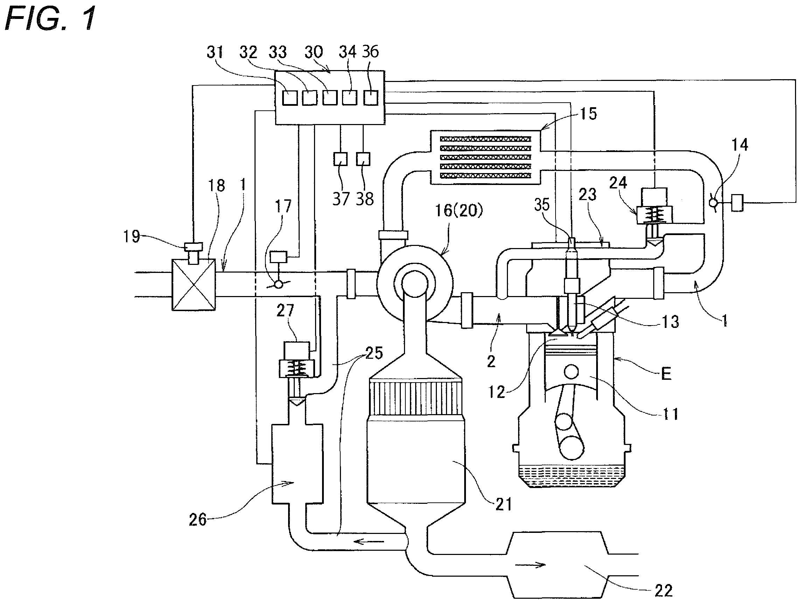

A control device for an internal combustion engine according to the invention will be described based on the drawings. Fig. 1 shows an example of an overall configuration view of a compression-ignition internal combustion engine provided with the control device for controlling the combustion engine. The internal combustion engine is a 4-cylinder diesel turbo engine (the internal combustion engine will be hereinafter simply referred to as "engine E"). The engine E is provided with an intake air passage 1, an exhaust passage 2, and a fuel injecting valve 13. Intake air is sent into a combustion chamber 12 of a cylinder in which a piston 11 is received, through the intake air passage 1. Exhaust generated in the combustion chamber 12 is emitted from the combustion chamber 12 through the exhaust passage 2. The fuel injecting valve 13 faces the inside of the combustion chamber 12. An intake air port is provided in an opening portion of the intake air passage 1 connected to the combustion chamber 12. An exhaust port is provided in an opening portion of the exhaust passage 2 connected to the combustion chamber 12. The ports are opened and closed by valves respectively. The fuel injection valve 13 injects fuel into the combustion chamber 12. The Engine E includes a pressure sensor 35 as a means to obtain (detect) pressure of the fuel to be injected from the fuel injection valve 13. The pressure sensor 35 may detect a pressure of fuel supplied to the fuel injection valve 13 through a delivery pipe (not shown).

A throttle valve 14, an intercooler 15, a compressor 16 of a turbocharger, a throttle valve 17, and an air cleaner 18 are provided in the intake air passage 1 in order from the intake air port toward an upstream side. The throttle valve 14 adjusts a sectional area of a flow path in the intake air passage. The internal cooler 15 cools the intake air flowing through the intake air passage 1. The throttle valve 17 adjusts a sectional area of a flow path in the intake passage 1. A temperature sensor 19 measuring temperature of the intake air is provided side by side with the air cleaner 18.

A turbine 20 of the turbocharger, an exhaust purifying portion 21, and a muffler 22 are provided in the exhaust passage 2 in order from the exhaust port toward a downstream side. The exhaust purifying portion 21 is provided with a catalyst etc. for removing nitrogen oxide etc. in the exhaust.

Communication between the turbine 20 and the exhaust port in the exhaust passage 2 and communication between the intake air port and the throttle valve 14 in the intake air passage 1 are made by a high pressure exhaust recirculating passage 23 that constitutes a high pressure exhaust gas recirculating device. A part of exhaust gas emitted from the combustion chamber 12 is recirculated as recirculated gas into the intake air passage 1 through the high pressure exhaust recirculating passage 23. The recirculated gas merges with intake air in the intake air passage 1 in accordance with a pressure state in the intake air passage 1 generated due to opening and closing of a high pressure exhaust recirculating valve 24 and opening and closing of the throttle valve 14. The high pressure exhaust recirculating valve 24 is provided in the high pressure exhaust recirculating passage 23.

Moreover, communication between the exhaust purifying portion 21 and the muffler 22 in the exhaust passage 2 and communication between the compressor 16 and the throttle valve 17 in the intake air passage 1 are made by a low pressure exhaust recirculating passage 25 that constitutes a low pressure exhaust gas recirculating device. A recirculated gas cooler 26 for cooling recirculated gas is provided in the low pressure exhaust recirculating passage 25. A part of the exhaust gas emitted from the combustion chamber 12 is recirculated as the recirculated gas to an upstream side of the intercooler 15 of the intake air passage 1 through the low pressure exhaust recirculating passage 25. The recirculated gas merges with intake air in the intake air passage 1 in accordance with a pressure state in the intake air passage 1 generated due to opening and closing of a low pressure exhaust recirculating valve 27 and opening and closing of the throttle valve 17. The low pressure exhaust recirculating valve 27 is provided in the low pressure exhaust recirculating passage 25.

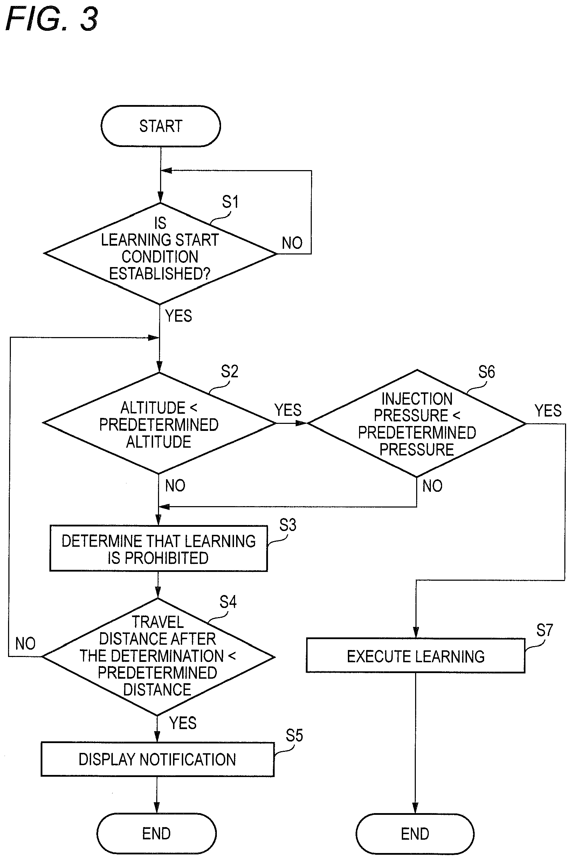

An ECU (electronic control unit) 30 mounted in the vehicle performs control of supply of fuel or air into the engine E, opening and closing of each valve, etc. The ECU 30 is a unit for comprehensively control the engine E and is provided with a fuel injection control portion 31, a learning portion 32, an altitude measuring portion 33 and a learning determining portion 34. The ECU 30 is provided with a non-transitory memory device 36 that stores a control routine illustrated in Fig. 3.

The fuel injection control portion 31 has a function of controlling the fuel injecting valve 13. In the engine E shown in Fig. 1, a plurality of fuel injections with different injection amounts and at different injection timings are performed in one cycle of combustion strokes. The fuel injection control portion 31 issues a control signal to the fuel injecting valve 13 so as to open the valve correspondingly to the fuel injection amount of each injection for a predetermined time. An opening period of the fuel injecting valve 13 is controlled based on the injection pressure detected by the pressure sensor 35. Further, the fuel injection control portion 31 controls the injection pressure. If necessary, the fuel injection control portion 31 adjusts the injection amount based on a learning result mentioned later.

The learning portion 32 learns an injection amount of the fuel injected from the fuel injecting valve 13. This learning is executed, for example, each time the vehicle travels a predetermined distance. Details of the learning of the learned injection amount are explained below. The ECU 30 determines the fuel amount to be injected from the fuel injection valve 13 based on an operation to acceleration pedal etc. by the driver of the vehicle. As mentioned above, the fuel injection control portion 31 controls the opening movement and the injection pressure in the fuel injection valve 13. Here, the amounts of the fuel actually injected from the fuel injection valves 13 (actual injection amount) of the four cylinders may vary therebetween due to tolerance or install condition of the fuel injection valves to the engine E. In addition, the actual injection amount per unit time in an open state may be changed due to aging. Accordingly, the fuel injection control portion 31 adjusts the designated injection amount based on several conditions so that the fuel is actually injected by the designated injection amount. That is, the amount of the fuel to be injected is learned. The learning is executed in a conventional way already known in the field. As long as the learning is not prohibited by the learning determining portion 34 which will be described later, the learning is executed at predetermined learning times such as a time when the vehicle is lined off from the manufacturing line and a time when the vehicle has traveled a predetermined distance.

The altitude measuring portion 33 is, for example, an altimeter that measures atmospheric pressure outside the vehicle and converts the atmospheric pressure into an altitude where the vehicle is traveling.

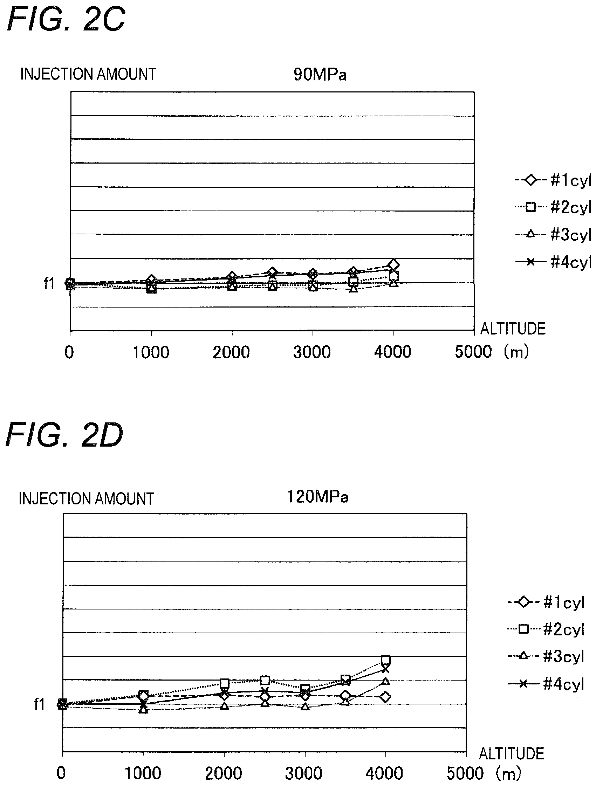

The learning determining portion 34 has a function of determining whether to execute learning by the learning portion 32 (i.e. determining whether to let the learning portion 32 to execute), based on the altitude measured by the altitude measuring portion 33 and injection pressure. As will be described later with reference to Figs. 2A to 2E, in a case where the learning of the injection amount is executed in the lowland, in other word, the learned injection amount is obtained by adjusting the designated injection amount, the actual injection amount in lowland is almost the same as the designated injection amount f₁ but the actual injection amount becomes deviated from the designated injection amount larger as the altitude of the vehicle gets higher. Especially, an area in which the injection pressure is high, for instance, in an over 120 MPa area in Figs. 2D and 2D, the deviation is conspicuous. Thus, when the learning is attempted at the altitude and the injection pressure which cause a large deviation between the reference injection amount and the actual injection amount, the learning may not be executed properly. Also, in case where the vehicle has many opportunities to travel on the highland and the learning is executed in the highland again, there may be a case where a deviation in the actual injection amount becomes conspicuous in the lowland. Therefore, as described above, the learning determining portion 34 determines that learning by the learning portion 32 is prohibited based on the altitude and the injection pressure. Thus, a deviation between the designated injection amount and the actual injection amount can be reduced as much as possible so that suitable fuel injection control can be performed.

The relations between an altitude and an actually measured fuel injection amount (actual injection amount) when injection pressure of the engine E is changed from one to another are shown in Figs. 2A to 2E respectively. The injection pressure in Fig. 2A is 30 MPa. The injection pressure in Fig. 2B is 60 MPa. The injection pressure in Fig. 2C is 90 MPa. The injection pressure in Fig. 2D is 120 MPa. The injection pressure in Fig. 2E is 150 MPa. #1cyl to #4cyl in Figs. 2A to 2E correspond to injectors provided in the cylinders respectively. In the engine, learning is executed in the lowland (in the vicinity of 0 m above sea level). That is, the learned injection amount is obtained.

When the injection pressure is low (in a range of from 30 MPa to 90 MPa, see Figs. 2A to 2C), altitude dependency of the actual injection amount is not commonly observed. Therefore, a substantially equal amount of fuel to the designated injection amount f₁ is injected through the lowland to the highland with the control of the fuel injection valve 13 based on the learned injection amount obtained by the learning at the lowland.

On the other hand, when the injection pressure is high (in a range of from 120 MPa to 150 MPa, see Figs. 2D to 2E), the following tendency is confirmed. That is, the actual injection amount increases from the lowland toward the highland to be more largely deviated from the reference injection amount. Particularly when the injection pressure is 150 MPa, the tendency is conspicuous. For example, in the injector #4cyl, at the altitude of 4000 m, large deviation Δf is generated in the actual injection amount in comparison with the designated injection amount f₁. In addition, when the injection pressure is high, the deviation in the fuel injection amount of each cylinder also increases from the lowland toward the highland.

A flow chart showing a control by the ECU 30 will be shown in Fig. 3. In the control flow, first, it is determined whether a learning start condition is established or not (S1 in Fig. 3). The above learning timing can be used as the learning start condition. As described, by making the learning process to be executed every predetermined travel distance, it becomes possible to conduct a learning process taken in consideration of the aging effects. This is merely an example of the learning start condition. Any other condition may be also used.

When the learning start condition is established (YES in S1 in Fig. 3), an altitude of the vehicle measured by the altitude measuring portion 33 is compared with a predetermined altitude (S2 in Fig. 3). When the altitude is equal to or higher than the predetermined altitude (NO in S2 in Fig. 3), the learning determining portion 34 determines that learning is prohibited (determines not to execute learning) (S3 in Fig. 3). For example, in the case of an engine having the characteristics shown in Figs. 2A to 2E, the predetermined altitude can be set at 4,000 m.

When determination has been made by the learning determining portion 34 that learning is not executed, a travel distance after the determination is compared with a predetermined distance (S4 in Fig. 3). The predetermined distance can be determined as appropriate. For example, when the predetermined distance is set at 100 km, until the vehicle travels 100 km after the determination, the processing flow goes back to the step of comparing the altitude of the vehicle with the predetermined altitude so that determination as to whether to execute learning can be repeated (NO in S4 and S2 in Fig. 3). When the travel distance of the vehicle after the determination has reached 100 km, a predetermined notification is notified to the driver (S5 in Fig. 3). On the other hand, when the predetermined distance is set at 0 km, the predetermination notification is notified (S5 in Fig. 3) as soon as the learning determining portion 34 determines that learning is not executed.

The notification may be a sign displayed on a display panel 37 and/or a sound generated from a speaker 38. The contents of the notification may be a notification to a driver that the learning has not yet been executed or a notification recommending execution of the learning. For example, the notification can be displayed to urge the driver to move the vehicle to altitude lower than the predetermined altitude. When the driver moves the vehicle in accordance with the notification and when the altitude of the vehicle has become lower than the predetermined altitude and injection pressure has become lower than predetermined pressure, the learning which was once prohibited by the learning determining portion 34 can be executed.

In addition, the contents of the notification may be displayed to urge the driver to have the vehicle inspected at a maintenance shop. In the general maintenance shop, a tool for learning has been prepared. Thus, learning can be executed smoothly.

When the altitude of the vehicle measured by the altitude measuring portion 33 is lower than the predetermined altitude (YES in S2 in Fig. 3), the injection pressure is compared with the predetermined pressure (S6 in Fig. 3). When the injection pressure is equal to or higher than the predetermined pressure (NO in S6 in Fig. 3), the learning determining portion 34 determines that learning is prohibited (S3 in Fig. 3).

For example, in the case of the engine having the characteristics shown in Figs. 2A to 2E, the predetermined pressure can be set to a large value such as at 120 MPa.

When the injection pressure is high, the actual injection amount may be largely deviated from the designated injection amount and it is not preferable to execute the learning of the injection amount in this condition. So, the learning determining portion 34 determines that learning is executed, and the learning portion 32 executes learning accordingly when the injection pressure is lower than the predetermined pressure. Therefore, the learning can be executed in better condition.

According to the embodiment, the learning is not performed based on the determination by the learning determining portion when the vehicle is traveling at a height in altitude which is equal to or higher than the learning prohibition altitude or the injection pressure is high. Accordingly, the learning of the injection amount is prevented from being executed under a condition which is not suitable for the learning.

According to the embodiment, even if the determination that the learning is not executed is made, a determination to execute the learning will be made when the altitude becomes lower than the learning prohibition altitude and the injection pressure becomes lower than the predetermined injection pressure. Accordingly, in a case where the learning is not executed since the vehicle is traveling in the highland when the learning start condition is established (i.e., at the time of the learning), the learning can be quickly executed when a suitable condition is established.

According to the embodiment, after the determination that the learning is not executed is made, the predetermined notification is notified to the driver when the vehicle travels a distance which is equal to or larger than the predetermined distance. Accordingly, even if the learning has not been executed, the learning can be executed based on the driver's determination. For example, the driver can drive from the highland to the lowland or drive to a maintenance shop in response to the notification in order to execute the learning.

The aforementioned embodiment is merely an example. The layout, the control flow, etc. of the control system of the engine E can be changed suitably as long as the problem of the present invention can be solved, i.e. as long as execution of learning can be prohibited based on the altitude of the vehicle and the fuel injection pressure to thereby suppress a deviation in the actual injection amount.

## Claims

1. A control device for an internal combustion engine (E) mounted on a vehicle comprising:
a fuel injection control portion (31) that controls a fuel injecting valve (13) that injects fuel into a cylinder of the internal combustion engine (E);
a learning portion (32) that learns an injection amount of the fuel injected from the fuel injecting valve (13);
an altitude measuring portion (33) that measures an altitude of a position where the vehicle travels; and
a learning determining portion (34) that determines whether to execute the learning based on the altitude;
a pressure obtaining unit that obtains an injection pressure of the fuel injected from the fuel injecting valve (13),
wherein when the altitude is equal to or higher than a predetermined learning prohibition altitude, the learning determining portion (34) determines not to execute the learning, and
when the altitude is lower than the learning prohibition altitude and the injection pressure is equal to or higher than a predetermined injection pressure, the learning determining portion (34) determines not to execute the learning.

2. The control device according to claim 1, wherein, under a condition where the determination has been made that the learning is not executed, when the altitude becomes lower than the learning prohibition altitude and the injection pressure becomes lower than the predetermined injection pressure, the learning determining portion determines to excute the learning.

3. The control device according to any one of claims 1 through 2, further comprising:
a notification portion that issues a predetermined notification to a driver when a travel distance of the vehicle after the learning determining portion has determined not to execute the learning is equal to or longer than a predetermined travel distance.

## Patentansprüche

1. Steuervorrichtung für einen an einem Fahrzeug montierten Verbrennungsmotor (E), mit:
einem Kraftstoffeinspritzsteuerabschnitt (31), der ein Kraftstoffeinspritzventil (13) steuert, das Kraftstoff in einen Zylinder des Verbrennungsmotors (E) einspritzt;
einem Lemabschnitt (32), der eine Einspritzmenge des vom Kraftstoffeinspritzventil (13) eingespritzten Kraftstoffs lernt;
einem Höhenmessabschnitt (33), der eine Höhe eines Ortes misst, an dem das Fahrzeug fährt;
einem Lernbestimmungsabschnitt (34), der basierend auf der Höhe bestimmt, ob der Lernvorgang ausgeführt werden soll; und
einer Druckerfassungseinheit, die einen Einspritzdruck des vom Kraftstoffeinspritzventil (13) eingespritzten Kraftstoffs erfasst,
wobei, wenn die Höhe größer oder gleich einer vorgegebenen Lemverbotshöhe ist, der Lernbestimmungsabschnitt (34) bestimmt, dass kein Lernvorgang ausgeführt werden soll, und
wenn die Höhe kleiner ist als die Lemverbotshöhe und der Einspritzdruck größer oder gleich einem vorgegebenen Einspritzdruck ist, der Lernbestimmungsabschnitt (34) bestimmt, dass kein Lernvorgang ausgeführt werden soll.

2. Steuervorrichtung nach Anspruch 1, wobei in einem Zustand, in dem bestimmt worden ist, dass der Lernvorgang nicht ausgeführt werden soll, wenn die Höhe niedriger wird als die Lernverbotshöhe und der Einspritzdruck niedriger wird als der vorgegebene Einspritzdruck, der Lernbestimmungsabschnitt bestimmt, dass der Lernvorgang ausgeführt werden soll.

3. Steuervorrichtung nach Anspruch 1 oder 2, ferner mit:
einem Benachrichtigungsabschnitt, der eine vorgegebene Benachrichtigung an einen Fahrer ausgibt, wenn eine Fahrtstrecke des Fahrzeugs, nachdem der Lernbestimmungsabschnitt bestimmt hat, dass der Lernvorgang nicht ausgeführt werden soll, größer oder gleich einer vorgegebenen Fahrtstrecke ist.

## Revendications

1. Dispositif de commande pour un moteur à combustion interne (E) monté dans un véhicule comprenant :
une partie de commande d'injection de carburant (31) qui commande une soupape d'injection de carburant (13) qui injecte du carburant dans un cylindre du moteur à combustion interne (E) ;
une partie d'apprentissage (32) qui apprend une quantité d'injection du carburant injecté à partir de la soupape d'injection de carburant (13) ;
une partie de mesure d'altitude (33) qui mesure une altitude d'une position où le véhicule se déplace ; et
une partie de détermination d'apprentissage (34) qui détermine s'il convient d'exécuter l'apprentissage sur la base de l'altitude ;
une unité d'obtention de pression qui obtient une pression d'injection du carburant injecté à partir de la soupape d'injection de carburant (13),
dans lequel, lorsque l'altitude est supérieure ou égale à une altitude d'interdiction d'apprentissage prédéterminée, la partie de détermination d'apprentissage (34) détermine de ne pas exécuter l'apprentissage, et
lorsque l'altitude est inférieure à l'altitude d'interdiction d'apprentissage et que la pression d'injection est supérieure ou égale à une pression d'injection prédéterminée, la partie de détermination d'apprentissage (34) détermine de ne pas exécuter l'apprentissage.

2. Dispositif de commande selon la revendication 1, dans lequel, dans une condition dans laquelle il a été déterminé que l'apprentissage n'est pas exécuté, lorsque l'altitude devient inférieure à l'altitude d'interdiction d'apprentissage et que la pression d'injection devient inférieure à la pression d'injection prédéterminée, la partie de détermination d'apprentissage détermine d'exécuter l'apprentissage.

3. Dispositif de commande selon l'une quelconque des revendications 1 et 2, comprenant en outre :
une partie de notification qui délivre une notification prédéterminée à un conducteur lorsqu'une distance de déplacement du véhicule après que la partie de détermination d'apprentissage a déterminé de ne pas exécuter l'apprentissage est supérieure ou égale à une distance de déplacement prédéterminée.
